# DEMANDE DE BREVET EUROPEEN

(11) **EP 3 496 237 A1**
(43) Date de publication de la demande: **12.06.2019**
(21) Numéro de dépôt: 18210683.1
(22) Date de dépôt: 06.12.2018
(51) Int. Cl.: H02K 1/27

(54) **MOTEUR ELECTRIQUE A COURANT CONTINU SANS BALAIS POUR SYSTEME D'ESSUYAGE DE VEHICULE AUTOMOBILE**

(30) Priorité: 08.12.2017 FR 1761818
(71) Demandeur: Valeo Systèmes d'Essuyage, 78322 Le Mesnil Saint Denis (FR)
(72) Inventeur: HERRADA, Jose-Luis, 78322 Le Mesnil Saint Denis (FR)
(74) Mandataire: Valeo Systèmes d'Essuyage

(57) **Abrégé**

L'invention concerne un moteur électrique à courant continu, notamment sans balais, pour système d'essuyage de véhicule automobile, comportant un stator (2) et un rotor (3), le stator (2) comprenant une pluralité de bobines d'excitation électromagnétique (4) du rotor (3) et le rotor (3) comprenant un aimant multipolaire (5) monté pour être animé d'un mouvement de rotation autour d'un axe de rotation (L) et muni d'au moins deux paires de pôles opposés, dans lequel au moins trois pôles présentent chacun une largeur dans un plan orthogonal à l'axe de rotation (L) différente desdites au moins deux autres et/ou trois pôles de même polarité sont décalés angulairement.

## Description

L'invention a pour objet un moteur électrique à courant continu, de préférence sans balais, pour un système d'essuyage de véhicule automobile.

Il est connu qu'un tel moteur électrique comporte principalement un rotor et un stator.

Généralement, le stator comprend une pluralité de bobines d'excitation électromagnétique du rotor tandis que le rotor comprend un aimant multipolaire.

Le moteur électrique est configuré pour que, quand les bobines sont alimentées en courant électrique, un champ magnétique est créé, entrainant un mouvement de rotation de l'aimant multipolaire autour d'un axe de rotation.

De manière connue, le moteur électrique est conçu pour fonctionner avec des tensions d'alimentation des bobines sinusoïdales, ce qui nécessite de générer une force électromotrice de retour de forme sinusoïdale.

Il est délicat de générer la forme sinusoïdale adéquate, en particulier du fait de la concentration de bobines.

Le but de l'invention est d'améliorer la situation.

A cet effet, l'invention a pour objet un moteur électrique à courant continu, notamment sans balais, pour système d'essuyage de véhicule automobile, comportant un stator et un rotor, le stator comprenant une pluralité de bobines d'excitation électromagnétique du rotor et le rotor comprenant un aimant multipolaire monté pour être animé d'un mouvement de rotation autour d'un axe de rotation et muni d'au moins deux paires de pôles opposés, dans lequel au moins trois pôles présentent chacun une largeur dans un plan orthogonal à l'axe de rotation différente desdites au moins deux autres et/ou trois pôles de même polarité sont décalés angulairement.

Ainsi, la force électromotrice générée prend une forme se rapprochant de la courbe idéale, malgré les bobines concentrées.

Selon une autre caractéristique de l'invention, le moteur comprend trois paires de pôles opposés.

Selon une autre caractéristique de l'invention, chaque pôle est configuré de sorte que l'aimant multipolaire est contenu dans un cylindre dont un axe de symétrie coïncide avec l'axe de rotation, et chaque pôle délimite un secteur angulaire dans un plan orthogonal à l'axe de rotation, au moins trois secteurs angulaires étant différents les uns des autres

Selon une autre caractéristique de l'invention, les deux pôles opposés de chaque paire sont disposés en vis-à-vis l'un de l'autre, en étant positionnés de manière diamétralement opposée dans un plan orthogonal à l'axe de rotation.

Selon une autre caractéristique de l'invention, les deux pôles opposés de chaque paire présentent la même largeur dans un plan orthogonal à l'axe de rotation.

Selon une autre caractéristique de l'invention, le moteur comprend trois paires de pôles opposés et les deux pôles opposés de chaque paire délimitent un secteur angulaire dans un plan orthogonal à l'axe de rotation d'une même valeur d'angle.

Selon une autre caractéristique de l'invention, le secteur angulaire d'une première paire est compris entre 30° et 39°, le secteur angulaire d'une deuxième paire est compris entre 40° et 49° et le secteur angulaire d'une troisième paire est compris entre 50° et 59°.

L'invention a également pour objet un système d'essuyage pour véhicule automobile, comprenant un moteur électrique tel que décrit précédemment.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue en perspective d'un moteur électrique selon la présente invention ;
- la figure 2 illustre une vue en coupe transversale d'un rotor de la figure 1 selon un premier mode de réalisation de l'invention ; et
- les figures 3 et 4 illustrent une vue en coupe transversale d'un rotor de la figure 1 selon un deuxième mode de réalisation de l'invention.

### Moteur électrique

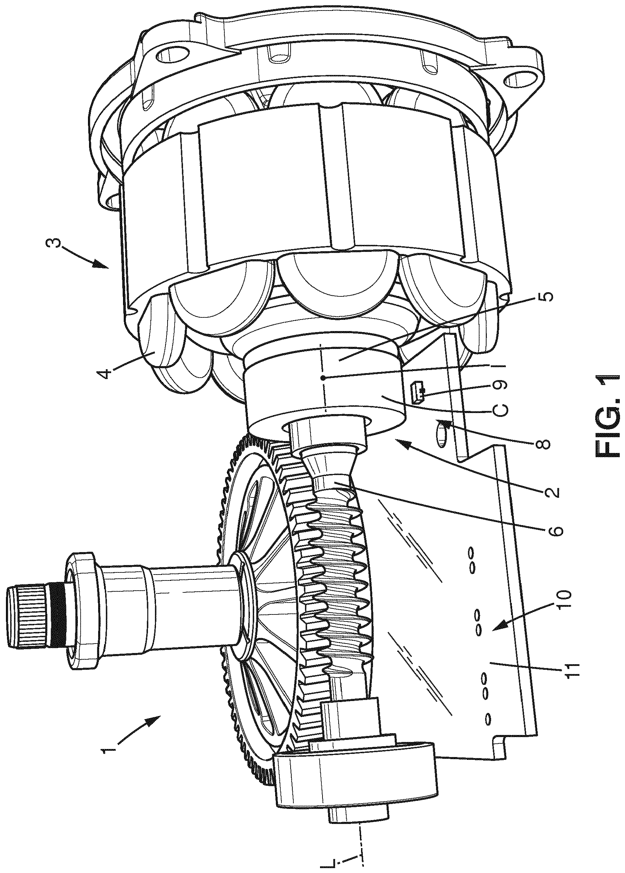

L'invention a pour objet un moteur électrique à courant continu, de préférence sans balais, pour un système d'essuyage de véhicule automobile, référencé 1 dans la figure 1.

Comme visible sur la figure 1, le moteur électrique 1 comporte un rotor 2 et un stator 3.

Le stator 3 comprend une pluralité de bobines d'excitation électromagnétique 4 du rotor 2.

Le rotor 2 comprend un aimant multipolaire 5 monté pour être animé d'un mouvement de rotation autour d'un axe de rotation, référencé L.

Le moteur électrique 1 est configuré pour que le rotor 2 tourne dans le stator 3, ce qui entraine une rotation d'un arbre moteur 6 solidaire de l'aimant multipolaire 5.

L'arbre moteur 6 s'étend selon l'axe de rotation L.

L'aimant multipolaire 5 est muni d'au moins deux paires de pôles opposés 7.

Un capteur de position de rotor, par exemple à effet Hall, 9, permet de commuter l'alimentation des bobines du stator 3.

Sur les modes de réalisation illustrés, l'aimant multipolaire 5 comprend trois paires de pôles opposés nord sud, référencés respectivement N1, S1, N2, S2 et N3, S3.

Chaque pôle est par exemple un barreau en matériau magnétique.

Chaque barreau est de préférence chanfreiné, comme il sera détaillé ultérieurement.

Les pôles délimitent un cylindre de révolution C dont un axe de symétrie coïncide avec l'axe de rotation L.

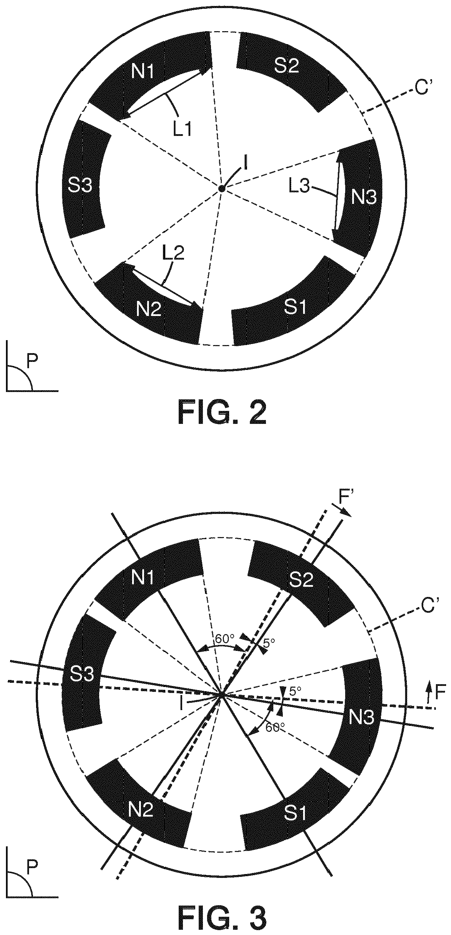

Ainsi, comme visible sur les figures 2 et 3, les pôles N1 à S3 délimitent un cercle C' dans un plan P orthogonal à l'axe de rotation L.

L'invention va maintenant être décrite en référence au mode de réalisation de la figure 2.

Selon ce mode de réalisation, au moins trois pôles présentent chacun une largeur dans le plan orthogonal P à l'axe de rotation différente desdites au moins deux autres.

Le plan orthogonal P passe avantageusement par le centre du cylindre de révolution C.

Par largeur, on entend dimension à une distance donnée du centre I du cercle C'.

Comme déjà indiqué, grâce à des largeurs différentes, la force électromotrice générée est une sinusoïde plus lissée que dans l'art antérieur.

Un autre avantage est qu'il n'y a pas coïncidence simultanée de ces bords avec les fentes statoriques qui génèrent du bruit.

Sur le mode de réalisation illustré à la figure 2, les pôles opposés d'une même paire présentent une même largeur, notée L1 pour la première paire, L2 pour la deuxième paire et L3 pour la troisième paire.

Comme il ressort de la figure 2, les largeurs L1, L2 et L3 sont différentes les unes des autres.

Comme également visible sur la figure 2, les pôles d'une même paire s'étendent en vis-à-vis l'un de l'autre, et sont positionnés diamétralement opposés dans le plan P.

On note aussi que les trois aimants de même polarité sont centrés sur un repère de 120°.

Comme déjà indiqué, chaque pôle est un barreau chanfreiné.

Ainsi, dans le plan P, chaque pôle délimite un secteur angulaire, noté AN1, A-S1, A-N2, A-S2, A-N3 et A-S3.

De préférence, au moins trois secteurs angulaires sont différents les uns des autres.

Avantageusement, les secteurs angulaires des pôles opposés d'une même paire sont identiques.

Dans ce cas, le secteur angulaire délimité par chacun des pôles N1, S1, appelé premier secteur angulaire, est compris entre 30° et 39°, le secteur angulaire délimité par chacun des pôles N2, S2, appelé deuxième secteur angulaire, est compris entre 40° et 49° et le secteur angulaire délimité par chacun des pôles N3, S3, appelé troisième secteur angulaire, est compris entre 50° et 59°.

De préférence, le premier secteur angulaire est de l'ordre de 38°, le deuxième secteur angulaire est de l'ordre de 48° et le troisième secteur angulaire est de l'ordre de 58°.

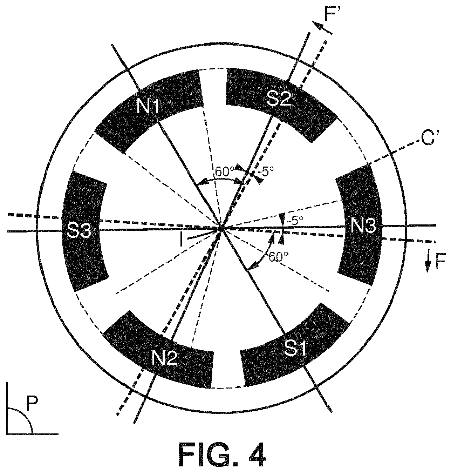

Selon un autre mode de réalisation, illustrés aux figures 3 et 4, les trois côtés des aimants de la même polarité ne sont pas tous à 120° mais sont décalés angulairement.

Dans ce cas, les aimants présentent de préférence des largeurs identiques.

Sur la figure 3, les aimants N1 et S1 étant pris comme référence, le couple d'aimants N2, S2 est décalé de 5° dans le sens de la flèche F' (pour S2) et le couple N3, S3 est décalé de 5° dans le sens de la flèche F(pour N3).

Sur la figure 4, les aimants N1 et S1 étant pris comme référence, le couple d'aimants N2, S2 est décalé de 5° dans le sens de la flèche F' (pour S2) et le couple N3, S3 est décalé de 5° dans le sens de la flèche F (pour N3).

Le décalage angulaire assure qu'il n'y a pas coïncidence simultanée de ces bords avec les fentes statoriques qui génèrent du bruit.

On note que les deux modes de réalisation illustrés sont combinables.

Par exemple, chaque pôle N1, S1 peut présenter une largeur de 50°, et chaque pôle N2, S2 et N3, S3 une largeur de 40° en étant décalé angulairement de 15°.

## Revendications

1. Moteur électrique à courant continu, notamment sans balais, pour système d'essuyage de véhicule automobile, comportant un stator (2) et un rotor (3), le stator (2) comprenant une pluralité de bobines d'excitation électromagnétique (4) du rotor (3) et le rotor (3) comprenant un aimant multipolaire (5) monté pour être animé d'un mouvement de rotation autour d'un axe de rotation (L) et muni d'au moins deux paires de pôles opposés, dans lequel au moins trois pôles présentent chacun une largeur dans un plan (P) orthogonal à l'axe de rotation (L) différente desdites au moins deux autres et/ou trois pôles de même polarité sont décalés angulairement.

2. Moteur électrique selon la revendication 1, comprenant trois paires de pôles opposés (N1, S1, N2, S2, N3, S3).

3. Moteur électrique selon l'une des revendications 1 ou 2, dans lequel chaque pôle est configuré de sorte que l'aimant multipolaire est contenu dans un cylindre dont un axe de symétrie coïncide avec l'axe de rotation (L), et que chaque pôle délimite un secteur angulaire (A1, A2, A3) dans un plan orthogonal à l'axe de rotation, au moins trois secteurs angulaires (A1, A2, A3) étant différents les uns des autres.

4. Moteur électrique selon l'une des revendications précédentes, dans lequel les deux pôles opposés de chaque paire sont disposés en vis-à-vis l'un de l'autre, en étant positionnés de manière diamétralement opposée dans un plan (P) orthogonal à l'axe de rotation (L).

5. Moteur électrique selon l'une des revendications précédentes, dans lequel les deux pôles opposés de chaque paire présentent la même largeur dans un plan (P) orthogonal à l'axe de rotation (L).

6. Moteur électrique selon la revendication 1, comprenant trois paires de pôles opposés et dans lequel les deux pôles opposés de chaque paire délimitent un secteur angulaire dans un plan (P) orthogonal à l'axe de rotation (L) d'une même valeur d'angle.

7. Moteur électrique selon la revendication précédente, dans lequel le secteur angulaire d'une première paire est compris entre 30° et 39°, le secteur angulaire d'une deuxième paire est compris entre 40° et 49° et le secteur angulaire d'une troisième paire est compris entre 50° et 59°.

8. Système d'essuyage pour véhicule automobile, comprenant un moteur électrique selon l'une quelconque des revendications précédentes.
